(19) Europäisches Patentamt
European Patent Office
Office européen des brevets

(11) Numéro de publication : **0 314 571 B1**

(12) # FASCICULE DE BREVET EUROPEEN

(45) Date de publication du fascicule du brevet : **02.01.92 Bulletin 92/01**

(51) Int. Cl.$^5$ : **C09K 5/04**

(21) Numéro de dépôt : **88402698.0**

(22) Date de dépôt : **26.10.88**

(54) **Application d'un mélange de fluides à base d'éther chlorofluoré et de solvants à des machines à absorption.**

(30) Priorité : **30.10.87 FR 8715101**

(43) Date de publication de la demande : **03.05.89 Bulletin 89/18**

(45) Mention de la délivrance du brevet : **02.01.92 Bulletin 92/01**

(84) Etats contractants désignés : **BE DE ES GB IT NL SE**

(56) Documents cités :
**EP-A- 0 143 509**
**DE-A- 3 202 377**
**DE-A- 3 524 737**

(73) Titulaire : **GAZ DE FRANCE**
**23, rue Philibert Delorme**
**F-75017 Paris (FR)**
Titulaire : **INSTITUT FRANCAIS DU PETROLE**
**4, Avenue de Bois-Préau**
**F-92506 Rueil-Malmaison Cédex (FR)**

(72) Inventeur : **Rolland, Laurence**
**10 Avenue du Président Roosevelt**
**F-92330 Sceaux (FR)**
Inventeur : **Cheron, Jacques**
**76bis Rue du Maréchal Foch**
**F-78600 Maisons-Lafitte (FR)**

(74) Mandataire : **Durand, Yves Armand Louis et al**
**Cabinet Z. Weinstein 20, Avenue de Friedland**
**F-75008 Paris (FR)**

EP 0 314 571 B1

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue Saint-Denis, 75001 PARIS

## Description

La présente invention a pour objet l'application d'un mélange de fluides à base d'éther chlorofluoré et de solvants à des machines thermiques à absorption pour la production de chaleur et/ou de froid.

Le principe du cycle à absorption de telles machines est le suivant : un fluide de travail initialement à l'état gazeux est soumis à des étapes de condensation, de détente, de vaporisation, puis d'absorption dans un fluide solvant. La solution obtenue est remise sous pression et une élévation de température permet de régénérer le fluide de travail à l'état gazeux dans un bouilleur. Le solvant est alors renvoyé à l'étape d'absorption.

Les couples fluides de travail-fluide solvant les plus utilisés sont les couples $NH_3$-$H_2O$ et $H_2O$-LiBr. Cependant, ces couples présentent des inconvénients majeurs qui empêchent leur utilisation dans certains domaines, notamment dans le domaine du chauffage individuel ou collectif. En effet, le couple $NH_3$-$H_2O$, thermodynamiquement intéressant, a une utilisation limitée du fait de la toxicité de $NH_3$. Le couple $H_2O$-LiBr ne peut pas être utilisé aux basses températures requises au niveau de l'évaporateur dans le cas d'application en pompe à chaleur pour le chauffage d'habitations individuelles ou collectives à cause de la cristallisation de l'eau.

Dans un cycle à absorption, il est important que le couple fluide de travail-fluide solvant présente de bonnes propriétés thermodynamiques, une bonne solubilité du fluide de travail dans le solvant, ne soit pas toxique et ne présente aucun risque de cristallisation.

Il est en outre préférable que le solvant présente un point d'ébullition normal supérieur, de préférence, à 100°C afin de faciliter la séparation au niveau du bouilleur.

On a déjà proposé à cet effet, l'utilisation d'hydrocarbures chlorofluorés à titre de fluides de travail avec des composés lourds comme solvants (Revue Générale de Thermique — N° 236-237 août-septembre 1981).

L'utilisation de ces couples fluide de travail-fluide solvant dans un cycle à absorption présente un intérêt certain, notamment en raison de la très grande solubilité du fluide de travail dans le solvant. Cependant, de tels couples se décomposent aux températures élevées lorsqu'ils sont en contact avec un composé métallique, alors que dans les mêmes conditions chaque constituant du couple est thermiquement stable. Or, il est primordial, pour une installation de chauffage comportant un cycle à absorption, que le système fluide de travail-solvant soit stable pendant une durée équivalente à 10 ans de fonctionnement. Ceci est également primordial pour des installations de climatisation et de réfrigération.

On a alors proposé d'inhiber la réaction de décomposition par introduction, dans ces couples fluide de travail-fluide solvant, d'additifs stabilisants appropriés et efficaces comme décrit dans la demande de brevet française N° 2567140, appartenant à la Demanderesse.

Il a également été suggéré d'utiliser des mélanges d'hydrocarbures chlorofluorés et de composés chlorofluorés, sans addition de stabilisant, à titre de couples de fluides pour des pompes à chaleur à absorption, comme décrit dans la demande de brevet française N° 2575174 appartenant à la Demanderesse.

Il est également possible de faire appel à d'autres composés fluorés n'entrant pas dans la classe des hydrocarbures chlorofluorés.

Ainsi, le brevet EP 0143509 recommande l'emploi comme fluide de travail, d'hydrocarbures et d'éthers fluorés acycliques, linéaires ou ramifiés, ou cycliques renfermant de 3 à 5 atomes de carbone et dont la formule élémentaire contient exclusivement du carbone, de l'hydrogène, du fluor et de l'oxygène dans le cas des éthers.

Dans le cas où l'on utilise des éthers fluorés comme fluides de travail, le solvant est le tétraglyme ou d'une manière plus générale, tout composé à caractère accepteur de proton.

L'emploi d'éthers fluorés comme fluides de travail, est particulièrement intéressant dans la mesure où ces composés sont déjà connus pour leur application dans le domaine des anesthésiques par exemple, et ne présentent de ce fait aucun risque de toxicité. Ce sont également des produits très solubles dans la plupart des solvants surtout lorsqu'ils renferment un atome de chlore dans leur formule élémentaire. En contrepartie, la présence de cet élément entraîne une moins bonne stabilité du couple fluide de travail-solvant en présence de métaux et aux températures normalement atteintes dans le bouilleur d'une machine à absorption.

Il est bien connu en effet qu'un hydrocarbure chlorofluoré du type $C_nH_{2n+2-x-y}F_xCl_y$ chauffé en présence de fer, d'aluminium ou de cuivre, et d'un composé donneur d'hydrogène, subit une transformation qui peut parfois être quantitative avec substitution des atomes d'hydrogène pris au solvant. Ce processus est par exemple décrit dans la demande de brevet française N° 2567139.

Dans le cas des éthers chlorofluorés, cette instabilité est amplifiée par la présence de la fonction éther. C'est ainsi que le méthoxy-1-trifluoro-1,1,2chloro-2éthane ($CH_3$-O-$CF_2$-CHFCl) est entièrement décomposé au bout de 100 heures, à 180°C, quel que soit le solvant hydrogéné mis en oeuvre.

Il en est de même pour le difluorométhoxy-1chloroltrifluoro-2,2,2éthane appelé isoflurane : ($CF_2H$-O-CHCl-$CF_3$), les principaux produits de décomposition résultant du transfert de l'atome de chlore sur des fragments de molécules du solvant : $CH_3Cl$, $C_4H_9Cl$, ....

La présente invention remédie aux désavantages précédemment évoqués en proposant l'application d'un

mélange de fluides à base d'éther chlorofluoré et de solvants à des machines à absorption.

En effet, on a trouvé que certains éthers chlorofluorés répondant à une structure particulière, tels que le difluorométhoxy-1trifluoro-1,1,2chloro-2éthane désigné sous le non d'enflurane et dont la formule est la suivante : $CF_2H-O-CF_2-CHFCl$ (point d'ébullition normal 56,6°C), présentent une bonne stabilité ainsi qu'une bonne solubilité et ne présentent pas de caractère de toxicité, lorsqu'ils sont utilisés avec un solvant approprié.

Ainsi, la présente invention a pour objet l'application d'un mélange de fluides comprenant du difluorométhoxy-1trifluoro-1,1,2chloro-2éthane et au moins un solvant choisi dans le groupe des esters aromatiques de formule :

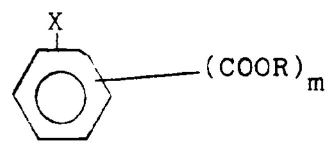

dans laquelle X désigne un atome d'hydrogène ou un radical méthyle, m est égal à 1 ou 2 et R représente un radical alkyle, linéaire ou ramifié, contenant de 1 à 8 atomes de carbone, et/ou des polyoxyéthlylèneglycols ω-ω'-dialkylés, de formule :

$$R_1(OC_2H_4)_nOR_2$$

dans laquelle $R_1$ et $R_2$ sont indépendamment des groupes alkyles linéaires ou ramifiés renfermant de 1 à 8 atomes de carbone et n est un nombre entier allant de 1 à 4, à des machines thermiques à absorption pour la production de chaleur et/ou de froid.

Selon une particularité de l'invention, le solvant utilisé à un point d'ébullition normal supérieur à 100°C.

Selon une autre particularité de l'invention, le solvant choisi est le benzoate de méthyle.

Selon encore une particularité de l'invention, le solvant choisi est le diéthylèneglycoldiméthyléther ou le tétraéthylèneglycoldiméthyléther.

Les mélanges de fluides ci-dessus s'appliquent notamment selon cette invention, à des pompes à chaleur dans lesquelles le fluide de travail gazeux est soumis successivement à une condensation en relation d'échange thermique avec un milieu constituant un receveur de chaleur, à une détente du fluide condensé, à une évaporation du fluide détendu, en relation d'échange thermique avec un milieu froid, et constituant une source de chaleur, à une absorption dans un solvant tel que précédemment défini, à une élévation de la pression de la solution riche obtenue, à un chauffage de la solution pressurisée de manière à vaporiser le fluide de travail, à un recyclage du fluide de travail gazeux résultant de la condensation, à un soutirage de la solution appauvrie résultante, à une détente de sa pression et à son renvoi à l'absorbeur.

L'invention sera mieux comprise et d'autres buts, caractéristiques détails et avantages de celle-ci apparaîtront plus clairement à la lecture de la description explicative et des exemples qui suivent.

Selon l'invention, on applique un mélange de fluides comprenant du difluorométhoxy-1trifluoro-1,1,2chloro-2éthane et au moins un solvant choisi parmi des esters aromatiques et/ou des polyoxyéthylèneglycols ω-ω'-dialkylés, à des machines thermiques à absorption pour la production de chaleur et/ou de froid.

Les esters aromatiques conformes à la présente invention sont notamment les mono ou diester aromatiques liquides répondant à la formule générale :

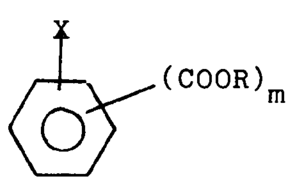

dans laquelle X désigne un atome d'hydrogène ou un radical méthyle, m est égal à 1 ou 2 et R représente un radical alkyle, linéaire ou ramifié, contenant de 1 à 8 atomes de carbone.

A titre d'exemple on peut citer comme ester aromatique le benzoate de méthyle répondant à la formule générale ci-dessus et dans laquelle m=1 X=H $R=CH_3$, et dont le point d'ébullition est de 199°C sous une atmosphère.

Les polyoxyéthylèneglycols ω-ω'-dialkylés conformes à la présente invention répondent à la formule générale suivante :

$$R_1\text{-}(OC_2H_4)_nOR_2$$

dans laquelle $R_1$ et $R_2$ sont indépendamment des groupes alkyles linéaires ou ramifiés renfermant de 1 à 8 atomes de carbone et n est un nombre entier allant de 1 à 4.

Comme exemple de tels solvants on peut citer le diéthylèneglycoldiméthyléther répondant à la formule générale précédente et dans laquelle n=2, $R_1=R_2=CH_3$, dont le point d'ébullition est de 160°C sous une atmosphère, et le tétraéthylèneglycoldiméthyléther répondant également à la formule générale précédente et dans laquelle n=4, $R_1=R_2=CH_3$,dont le point d'ébullition est de 276°C sous une atmosphère.

Pour une application à des machines thermiques à absorption pour la production de chaleur et/ou de froid, les quantités relatives de difluorométhoxy-1trifluoro-1,1,2chloro-2éthane et de solvant sont déterminées de manière connue en fonction des conditions de fonctionnement du cycle d'absorption. Avantageusement, on utilise un pourcentage de 5 à 80% en fluide de travail dans le mélange fluide de travail et solvant.

Afin de montrer les performances lors de l'application de tels mélanges de fluides à des machines thermiques à absorption, on a réalisé des essais de stabilité et de solubilité donnés dans les exemples non limitatifs qui vont suivre et qui sont à comparer avec des essais non conformes à la présente invention.

A. ESSAIS DE STABILITE

Exemple 1

On a formé une composition en mélangeant 5 moles de difluorométhoxy-1trifluoro-1,1,2chloro-2éthane (enflurane), 3 g de benzoate de méthyle, et on a testé la stabilité de cette composition pendant 100 heures. à 180°C selon le mode opératoire suivant : le mélange a été introduit dans un tube PYREX à paroi épaisse renfermant une éprouvette métallique de 250 mg d'acier ordinaire convenablement nettoyée. Le tube a été refroidi à la température de l'azote liquide, scellé sous vide et portée à une température de 180°C pendant 100 heures. Le tube a été ensuite à nouveau replongé dans de l'azote liquide, relié à une rampe à vide et ouvert à l'aide d'un dispositif approprié. Les produits volatils ont été récupérés par purgeage à basse température et analysés par chromatographie en phase gazeuse. La quantité de fluide de travail restant dans la phase liquide a été dosée par chromatographie en phase gazeuse selon la méthode de l'étalonnage interne. Le taux de décomposition du fluide de travail est de 0,9% d'après la moyenne de deux essais.

En portant la durée du test à 700 heures, le taux de décomposition du fluide de travail n'atteint que 5,8%.

Exemple 2

On a répété l'exemple 1 en remplaçant le benzoate de méthyle par le diéthylèneglycoldiméthyléther. Le pourcentage de décomposition du fluide de travail ne dépasse pas alors 4,7%.

Exemple 3

On a répété l'exemple 1 en remplaçant le benzoate de méthyle par le tétraéthylèneglycoldiméthyléther. Le pourcentage de décomposition du fluide de travail ne dépasse pas 4,9% d'après la moyenne de deux essais.

Les essais suivants a à c sont donnés à titre de témoins et sont à comparer aux exemples 1 à 3 qui illustrent l'invention :

Essai a

On a répété le processus décrit dans l'exemple 1 en remplaçant le benzoate de méthyle par la N-méthylpyrrolidone et en utilisant une éprouvette métallique de 292 mg. Le pourcentage de décomposition du fluide de travail atteignait 63%.

Essai b

On a répété le processus décrit dans l'exemple 2 en remplaçant le difluorométhoxy-1trifluoro-1,1,2chloro-2éthane par le méthoxy-1-trifluoro-1,1,2chloro-2éthane ($CH_3$-O-$CF_2$-CHFCl). Le pourcentage de décomposition du fluide de travail atteignait 100%. Les principaux produits de transformation identifiés par chromatographie en phase gazeuse, étaient le dioxanne et le diméthyléther.

Essai c

On a répété le processus décrit dans l'exemple 3 en remplaçant le difluorométhoxy-1trifluoro-1,1,2chloro2éthane par le difluorométhoxy-1trifluoro-2,2,2chloro-1éthane (isoflurane). Le pourcentage de décomposition du fluide de travail atteignait 96%, les principaux produits de transformation identifiés par chromatographie en phase gazeuse étant le dioxanne, le diméthyléther et le chlorure de méthyle.

Les exemples ci-dessus illustrent l'excellente stabilité de tels mélanges de fluides qui sont donc particulièrement aptes à une utilisation dans les machines thermiques à absorption pour la production de chaleur et/ou de froid.

B. ESSAIS DE SOLUBILITE

Une bonne solubilité du fluide de travail dans le solvant entraîne un faible débit de solution soluté-solvant et diminue donc le travail de la pompe de circulation. De plus, une bonne solubilité s'accompagne le plus souvent d'une forte chaleur de mélange qui favorise la réduction des investissements.

La solubilité peut être caractérisée indirectement par le coefficient d'activité à dilution infini $\gamma^{\infty}$.

En effet, la pression partielle d'un constituant A au-dessus d'un mélange est donnée par :

$$pA = \gamma A \; XA \; PA \text{ (à T fixée)}$$

avec :

| | |
|---|---|
| pA = | pression partielle du constituant A |
| PA = | tension de vapeur du produit A pur à la température fixée T |
| XA = | titre molaire du composant A |
| $\gamma$ A = | coefficient d'activité du composant A |

Pour une même valeur de pA, XA (concentration en phase liquide ou solubilité) sera d'autant plus élevée que $\gamma$A sera de faible valeur.

En particulier, une bonne solubilité est caractérisée par $\gamma \leq 1$.

Il est possible de déterminer la valeur de $\gamma$ pour les très faibles valeurs de concentration du composé A (dilution infinie) à partir de la mesure du temps de rétention (temps écoulé en chromatographie entre l'injection et la détection du composé A).

Le mode opératoire retenu pour les mesures est le suivant : le solvant étudié est déposé, en masse connue, sur la colonne du chromatographe de façon à obtenir un taux d'imprégnation de l'ordre de 15 à 20 g de solvant pour 100 g de support.

Le soluté étudié est injecté à très faibles quantités, 50 $\mu$l pour les solutés gazeux ou 0,2 $\mu$l pour les solutés liquides, dans le flux de gaz porteur d'hélium (débit 30 cc/min).

Pour chaque soluté, deux injections sont généralement suffisantes.

La mesure du temps de rétention est obtenue par un intégrateur relié au chromatographe et par un enregistreur qui permet de visualiser la sortie et la forme des pics ainsi que de déceler toute anomalie : dérive de la ligne de base, pics trop étalés...

Dans les exemples qui suivent, la solubilité ($\gamma^{\infty}$) du difluorométhoxy-1trifluoro-1,1,2chloro-2éthane (enflurane) dans divers solvants est comparée avec celle obtenue avec les hydrocarbures fluorés suivants : le chlorodifluorométhane (R22 = $CHClF_2$), le trifluorométhane (R23 = $CHF_3$), le 1-2-dichloro 1,1,2,2-tétrafluoroéthane (R114 = $CClF_2 - CClF_2$), le 1-chloro 1,2,2,2-tétrafluoroéthane (R124 = $CF_3CHClF$).

Exemple 1

Le solvant déposé sur la colonne du chromatographe est le benzoate de méthyle $C_6H_5COOCH_3$.

Les résultats obtenus avec divers solutés à 20°C sont résumés ci-après :

| | | $\gamma^{\infty}$ à T = 20°C |
|---|---|---|
| Soluté | R22 | 1 |
| | R23 | 2,5 |
| | R114 | 6,8 |
| | R124 | 1,4 |
| | enflurane | 0,6 |

Comme on peut le constater la meilleure solubilité mesurée est celle du couple enflurane-benzoate de méthyle.

Exemple 2

Le solvant déposé sur la colonne du chromatographe est le diéthylèneglycoldiméthyléther $CH_3O(CH_2CH_2O)_2CH_3$ (E141).

Les résultats obtenus avec divers solutés à 20°C sont résumés ci-après :

| | | $\gamma^{\infty}$ à T = 20°C |
|---|---|---|
| Soluté | R22 | 0,2 |
| | R23 | 0,5 |
| | R114 | 3,6 |
| | R124 | 0,25 |
| | enflurane | 0,2 |

La faible valeur de $\gamma^{\infty}$ pour le couple enflurane-diéthylèneglycoldiméthyléther est donc synonyme de bonne solubilité mutuelle.

C. EXEMPLE D'APPLICATION A UNE POMPE A CHALEUR

Un mélange de difluorométhoxy-1trifluoro-1,1,2chloro-2éthane et de benzoate de méthyle, est utilisé dans une pompe à chaleur.

Pour ce faire, on utilise un dispositif conventionnel constituant un circuit fermé étanche comprenant en série :

- un échangeur de condensation pour le fluide de travail qui est en relation d'échange thermique avec un milieu extérieur à chauffer constituant un receveur de chaleur,
- un détendeur,
- un échangeur d'évaporation qui est en relation d'échange thermique avec un milieu froid tel que par exemple de l'air ou de l'eau, constituant une source de chaleur du circuit,
- un contacteur pour l'absorption du fluide de travail dans le solvant,
- une pompe pour élever la pression, et
- un bouilleur pour régénérer le fluide de travail à l'état gazeux, lequel bouilleur est chauffé par un quelconque moyen convenable tel que par exemple un chauffage au gaz ou au fuel ou autre.

On a constaté que les résultats obtenus étaient excellents, particulièrement en ce qui concerne la stabilité, puisque après un fonctionnement de 100 heures environ, le taux de décomposition du fluide de travail était d'environ 0,9%.

Les exemples ci-dessus montrent donc tout l'intérêt de l'utilisation de tels mélanges de fluides dans l'application aux domaines du chauffage et de la réfrigération utilisant des systèmes à absorption tels que par exemple des pompes à chaleur.

Bien entendu, l'invention n'est nullement limitée aux modes de réalisation décrits et illustrés quine sont donnés ici qu'à titre d'exemple. Au contraire, l'invention comprend tous les équivalents techniques des moyens décrits ainsi que leurs combinaisons si celles-ci sont effectuées suivant son esprit.

## Revendications

1. Application d'un mélange de fluides comprenant du difluorométhoxy-1trifluoro-1,1,2chloro-2éthane et au moins un solvant choisi dans le groupe des esters aromatiques de formule :

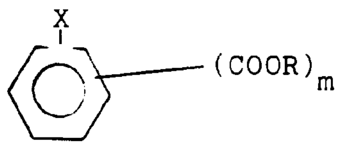

dans laquelle X désigne un atome d'hydrogène ou un radical méthyle, m est égal à 1 ou 2 et R représente un radical alkyle, linéaire ou ramifié, contenant de 1 à 8 atomes de carbone, et/ou des polyoxyéthylèneglycols ω,ω'-dialkylés de formule :

$$R_1(OC_2H_4)_nOR_2$$

dans laquelle $R_1$ et $R_2$ sont indépendamment des groupes alkyles linéaires ou ramifiés renfermant de 1 à 8 atomes de carbone et n est un nombre entier allant de 1 à 4, à des machines thermiques à absorption pour la production de chaleur et/ou de froid.

2. Application selon la revendication 1, caractérisée en ce que le solvant a un point d'ébullition normal supérieur à 100°C.

3. Application selon la revendication 1, caractérisée en ce que le solvant est le benzoate de méthyle.

4. Application selon la revendication 1, caractérisée en ce que le solvant est le diéthylèneglycoldiméthyléther ou le tétraéthylèneglycoldiméthyléther.

5. Application selon l'une quelconque des revendications 1 à 4, dans laquelle on soumet le fluide de travail gazeux successivement à une condensation, en relation d'échange thermique avec un milieux constituant un receveur de chaleur, à une détente du fluide condensé, à une évaporation du fluide détendu en relation d'échange thermique avec un milieu froid constituant une source de chaleur et à une absorption dans un solvant tel que défini selon la revendication 1, on élève la pression de la solution riche obtenue, puis on chauffe la solution pressurisée de manière à vaporiser le fluide de travail, on recycle le fluide de travail gazeux résultant de la condensation, on sort la solution appauvrie résultante, on détend sa pression et on la renvoie à l'absorbeur.

## Patentansprüche

1. Anwendung, an thermischen Absorptionsmaschinen für die Erzeugung von Hitze und/oder Kälte, eines Gemisches aus fliessfähigen Medien mit difluoromethoxy-1trifluoro-1,1,2chloro-2Äthan und wenigstens einem Lösungsmittel, das in der Gruppe der aromatischen Esteren mit der Formel :

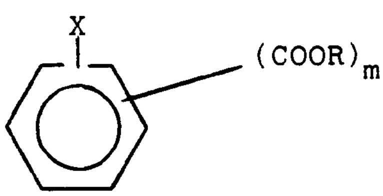

gewählt wird, in welcher X einen Wasserstoffatom oder ein Methylradikal bezeichnet, m gleich 1 oder 2 ist und R ein geradkettiges oder verzweigtes Alkylradikal darstellt, welches 1 bis 8 Kohlenstoffatome und/oder die alkylierte Polyoxyäthylenglycole, ω,ω'-gemäß der Forme :

$$R_1(OC_2H_4)_nOR_2$$

aufweist, in welcher $R_1$ und $R_2$ unabhängig von den geradkettigen oder verzweigten, 1 bis 8 Kohlenstoffatome enthaltenden Alkylgruppen sind und n eine den Wert von 1 bis 4 annehmende Ganzzahl ist.

2. Anwendung gemäß Anspruch 1, dadurch gekennzeichnet, daß das Lösungsmittel einen höher als 100°C

liegenden normalen Siedepunkt hat.

3. Anwendung gemäß Anspruch 1, dadurch gekennzeichnet daß das Lösungsmittel das Methylbenzoat ist.

4. Anwendung gemäß Anspruch 1, dadurch gekennzeichnet, deß das Lösungsmittel der diäthylenglycoldimethyläther oder der tetraäthylenglycoldimethyläther ist.

5. Anwendung gemäß irgendeinem der Ansprüche 1 bis 4, bei welcher man das gasförmige fließfähige Arbeitsmittel aufeinanderfolgend einer Kondensierung in Wärmetauschbeziehung mit einen Wärmeempfänger bildenden Medien, einer Entspannung des kondensierten fließfähigen Mediums, einer Verdunstung des entspannten fließfähigen Mediums in Wärmetauschbeziehung mit einem eine Wärmequelle bildenden kalten Medium und einer Absorption in einem gemäß dem Anspruch 1 festgelegten Lösungsmittel unterwirft, man den Druck der erhaltenen reichen Lösung erhöht und man dann die unter Druck gesetzte Lösung erwärmt, um die Arbeitsflüssigkeit zu verdunsten, man dass aus der Konsendierung entstehende gasförmige fliessfähige Arbeitsmittel zurückführt, man die entstehende verarmte Lösung herausnimmt, man ihren Druck entspannt und man sie zum Absorber zurückbefördert.

## Claims

1. Application of a mixture of fluids comprising difluoromethoxy-1trifluoro-1,1,2chloro-2ethane and at least one solvent selected in the group of aromatic esters with the formula :

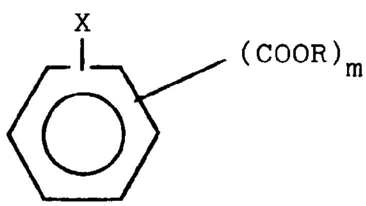

wherein X designates an atom of hydrogen or a methyl radical, m is equal to 1 or 2 and R represents a linear or branched alkyl radical containing from 1 to 8 carbon atoms and/or dialkylated polyoxyethyleneglycols ω,ω'-with the formula :

$$R_1(OC_2H_4)_nOR_2$$

wherein $R_1$ and $R_2$ are independently of the linear or branched alkyl groups containing from 1 to 8 carbon atoms and n is a whole number going from 1 to 4, to thermal absorption machines for the production of heat and/or of cold.

2. Application according to claim 1, characterized in that the solvent has a normal boiling point above 100°C.

3. Application according to claim 1, characterized in that the solvent is the methylbenzoate.

4. Application according to claim 1, characterized in that the solvant is the diethyleneglycol-dimethylether or the tetraethyleneglycoldimethylether.

5. Application according to any one of claims 1 to 4, wherein one subjects the gaseous working fluid successively to a condensation in heat exchanging relationship with a medium constituting a heat receiver, to an expansion of the condensed fluid, to an evaporation of the expanded fluid in heat exchanging relationship with a cold medium constituting a heat source and to an absorption in a solvent such as defined according to claim 1, one raises the pressure of the rich solution obtained and one then heats the pressurized solution so as to vaporize the working fluid, one recycles the gaseous working fluid resulting from the condensation, one extracts the resulting impoverished solution, one expands its pressure and one sends it back to the absorber.